# EUROPEAN PATENT APPLICATION

(11) **EP 4 036 096 A1**
(43) Date of publication of application: **03.08.2022**
(21) Application number: 19947330.7
(22) Date of filing: 24.09.2019
(51) Int. Cl.: C07F 3/06, B01J 8/00

(54) **CONTINUOUS PREPARATION METHOD FOR BENZYL ZINC HALIDE AND DERIVATIVES THEREOF**

(71) Applicant: Asymchem Laboratories (Tianjin) Co., Ltd., Tianjin 300457 (CN)
(72) Inventor: HONG, Hao, Morrisville North Carolina 27560 (US); LU, Jiangping, Tianjin 300457 (CN); FENG, Xichun, Tianjin 300457 (CN); SUN, Xingfang, Tianjin 300457 (CN); LIANG, Yong, Tianjin 300457 (CN)
(74) Representative: Glawe, Delfs, Moll
(86) International application number: PCT/CN2019/107546
(87) International publication number: WO 2021/056193

(57) **Abstract**

The invention provides a continuous preparation method for benzylzinc halide and a derivative thereof. The continuous preparation method uses a continuous reactor for reaction of direct inserting a zinc atom into a carbon-halogen bond, wherein the continuous reactor comprises a heating section and a cooling section that are connected to each other, the cooling section is located above the heating section, and the cooling section has a product overflow port, the continuous preparation method comprising: respectively continuously feeding a liquid reaction material and a zinc powder to the heating section, the zinc powder being continuously fed into the heating section from an over part of the heating section, the liquid reaction material being fed into the heating section from a lower part of the heating section, subjecting same to a direct the zinc atom insert into carbon-halogen bond reaction to obtain a product system, and allowing the product system to discharge from the continuous reactor via the product overflow port, wherein the liquid reaction materials comprise a halide, and the halide has structural formula I

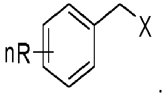

According to the continuous preparation method, zinc powder does not accumulate in the continuous reactor, thus avoiding the risk of spraying material and facilitating the application of the continuous preparation method in large-scale production.

## Description

### Technical Field

The invention relates to the actual preparation field of organic zinc, in particular to a continuous preparation method for benzylzinc halide and a derivative thereof.

### Background

Organic zinc reagents are often used to construct organic molecules and show unique chemical characteristics due to excellent functional group compatibility and high reaction activity, thus being widely applied in organic synthesis. Among the common organic zinc reagents, benzylzinc reagent is an important benzyl functional reagent and is often used to introduce benzyl into molecules. Due to the high reactivity of benzyl lithium and benzyl magnesium metal organic reagents, the organic metals are likely to polymerize and cannot exist stably. Therefore, functionalized benzylzinc halide occupies a unique status.

Traditionally, the relevant benzylzinc halide is generated through batch reaction of reactive zinc and a benzyl halide and direct insertion of zinc atoms into the carbon-halogen bond (C-X). Due to the poorer reactivity of zinc atoms compared to that of metals such as magnesium and lithium, the reaction is usually carried out through heating, is long in operation time, and is prone to material accumulation with the risk of spraying material, as a result, large-scale reaction is limited. Nade'ge Boudet et al. and Albrecht Metzger et al. achieved the insertion of zinc atoms into carbon-halogen bonds in substituted aromatic halogenated hydrocarbons and substituted benzyl halogenated hydrocarbons by adding lithium chloride to promote the insertion reaction of the reactive metal zinc under mild reaction conditions respectively. Fabian M. Piller and Albrecht Metzger et al. achieved the insertion of zinc atoms in benzyl halogenated hydrocarbon with magnesium metal/lithium chloride/zinc chloride instead of more hazardous zinc powder, with higher reaction rate and at lower temperature. However, the commonly used lithium chloride and zinc chloride have low solubility in organic solvents and usually need to be treated under high temperature before being dissolved into the solvents for reaction, as a result, the application in practical large-scale production is limited, and the application of multiple solids also limits further process improvement. Moreover, the application of magnesium metal, lithium chloride and zinc chloride cause poor atomic economy and generates a large amount of solid waste which is not conducive to environmental protection.

### Summary

The invention mainly aims to provide a continuous preparation method for benzylzinc halide and a derivative thereof so as to solve the problem that the preparation method of benzylzinc halide in the prior art is not applicable to the large-scale production.

In order to achieve the above purpose, according to one aspect of the invention, a continuous preparation method for benzylzinc halide and a derivative thereof is provided. The continuous preparation method uses a continuous reactor for reaction of direct inserting a zinc atom into a carbon-halogen bond, wherein the continuous reactor comprises a heating section and a cooling section that are connected to each other, the cooling section is located above the heating section, and the cooling section has a product overflow port, the continuous preparation method comprising: respectively continuously feeding a liquid reaction material and a zinc powder to the heating section, the zinc powder being continuously fed into the heating section from an over part of the heating section, the liquid reaction material being fed into the heating section from a lower part of the heating section, subjecting same to a direct the zinc atom insert into carbon-halogen bond reaction to obtain a product system, and allowing the product system to discharge from the continuous reactor via the product overflow port, wherein the liquid reaction materials comprise a halide, and the halide has a structural formula I: 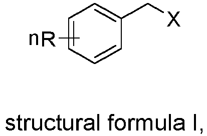 wherein n is any one integer of 0 to 5, X is -CI, -Br or -I, each R is independently selected from -F, -CI, -Br, nitro, cyano, C₁ to C₅ alkyl, C₁ to C₅ alkoxy and -COOR₁, and R₁ is C₁ to C₅ alkyl.

Further, the temperature of the heating section is controlled at 60 ~ 80 °C, and preferably 6 5~ 75 °C.

Further, the temperature of the cooling section is controlled at 10 ~ 30 °C, and preferably 15 ~ 25 °C.

Further, the product overflow port is provided with a drainage tube connected to an outer wall of the cooling section, the drainage tube extends obliquely upward in a direction away from the outer wall, the angle α between the drainage tube and the outer wall is preferably 10° ~ 40°, and preferably 20° ~ 30°, and the product overflow port is preferably provided at one end of the cooling section near the heating section.

Further, the continuous reactor is a column continuous reactor or a stirred continuous reactor.

Further, the heating section of the column continuous reactor is provided with a stirring paddle.

Further, the preparation method comprises: respectively continuously feeding the liquid reaction material at a first flow rate and the zinc powder at a second flow rate into the heating section, subjecting the liquid reaction material and the zinc powder to a direct insert zinc powder into carbon-halogen bond reaction in the heating section to obtain a product system, allowing the product system to discharge from the continuous reactor via the product overflow port, and feeding the zinc powder at a third flow rate into the heating section after the overflow rate is stable, wherein the second flow rate and the first flow rate are controlled so that the molar equivalent of the fed zinc powder relative to the fed halide is 1 to 3, and preferably 1.5 to 2.0, and the third flow rate and the first flow rate are controlled so that the molar equivalent of the fed zinc powder to the fed halide is 1 to 1.1.

Further, the retention time of the zinc powder in the heating section is 2 ~ 4 h, and preferably 2.5 - 3.5 h.

Further, the liquid reaction materials further comprise a polar solvent, an initiator and a zinc powder activator, wherein the polar solvent is preferably tetrahydrofuran, the initiator is preferably any one or more selected from 1,2-dichloroethane and 1,2-ethylene dibromide, and the zinc powder activator is preferably any one or more selected from trimethyl chlorosilane and trimethyl bromosilane.

Further, the weight ratio of the solvent to the halide is 7 ~ 13: 1, and preferably 8 ~ 10:1, the molar equivalent of the initiator relative to the halide is preferably 0.03 ~ 0.08, and preferably 0.04 ~ 0.05, and the molar equivalent of the zinc powder activator relative to the halide is preferably 0.03 ~ 0.08, and preferably 0.04 ~ 0.05.

By applying the technical solution of the invention, the continuous reactor is used as a reaction device for the direct insertion of zinc atoms into the carbon-halogen bond reaction, and the zinc powder is continuously fed into the heating section from an over part of the heating section, and the liquid reaction material is continuously fed into the heating section from the lower part of the heating section, and the zinc powder and the liquid reaction material are in countercurrent contact in the heating section, so that the contact efficiency of the zinc powder and the liquid reaction material is improved, and the efficient operation of the continuous reaction is ensured. Since the reaction is continuous, the continuously fed zinc powder is continuously consumed as the continuous reaction proceeds, and the obtained product continuously flows out from the product overflow port, so that the zinc powder does not accumulate in the continuous reactor, thus avoiding the risk of spraying material and facilitating the application of the continuous preparation method in the large-scale production.

### Brief Description of the Drawings

The invention will be further explained by the accompanying drawings constituting one part of the application. The illustrative embodiments and descriptions of the invention are used to explain the invention and are not intended to constitute an improper limitation to the invention. In the accompanying drawings:

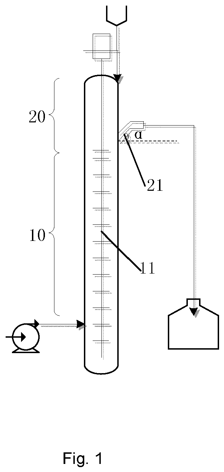

Fig.1 shows a schematic structural drawing of the continuous reactor according to one embodiment of the invention.

Wherein the above-described accompanying drawing includes the following accompanying drawing markings:
10: heating section; 20: cooling section; 11: stirring paddle; 21: drainage tube.

### Detailed Description of the Embodiments

It is noted that the embodiments and features of the embodiments in the present application can be combined with each other without conflict. The invention will be described in detail below with reference to the accompanying drawings and in conjunction with the embodiments.

As analyzed in the background technology of the present application, the technical solution of direct insertion of zinc atoms into a carbon-halogen bond in the prior art is carried out by adopting batch reactions, as a result, it is prone to cause material accumulation and triggering the risk of spraying material, thus limiting the application of the technical solution in industrial large-scale production. The insertion of zinc atoms in benzyl halogenated hydrocarbon is achieved by using magnesium metal/lithium chloride/zinc chloride so as to avoid this risk of spraying material, but the solubility limitation of lithium chloride and zinc chloride in organic solvents led to the need for high temperature treatment, thus also limiting the application of this route in industrial large-scale production. In order to solve the problem in the prior art that the preparation method for benzylzinc halide is not applicable to large-scale production, the present application provides a continuous preparation method for benzylzinc halide and a derivative thereof. In an exemplary embodiment of the present application, the continuous preparation method uses a continuous reactor for reaction of direct inserting a zinc atom into a carbon-halogen bond, wherein, as shown in Fig.1, the continuous reactor comprises a heating section 10 and a cooling section 20 that are connected to each other, the cooling section 20 is located above the heating section 10, and the cooling section 20 has a product overflow port, the continuous preparation method comprising: respectively continuously feeding a liquid reaction material and a zinc powder to the heating section 10, the zinc powder being continuously fed into the heating section 10 from an over part of the heating section 10, the liquid reaction material being fed into the heating section 10 from a lower part of the heating section 10, subjecting same to a direct the zinc atom insert into carbon-halogen bond reaction to obtain a product system, and allowing the product system to discharge from the continuous reactor via the product overflow port, wherein the liquid reaction materials comprise a halide, and the halide has structural formula I. 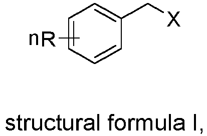 wherein n is any one integer of 0 to 5, X is -CI, -Br or -I, each R is independently selected from -F, -CI, -Br, nitro, cyano, C₁ to C₅ alkyl, C₁ to C₅ alkoxy and -COOR₁, and R₁ is C₁ to C₅ alkyl.

The reaction formula for the above reaction of direct insertion of the zinc atoms into the carbon-halogen bond is as follows:

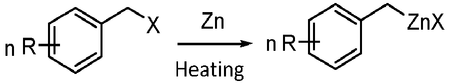

The continuous reactor is used as the reaction device for the direct insertion of zinc atoms into the carbon-halogen bond reaction, and the zinc powder is continuously fed into the heating section 10 from an over part of the heating section 10, and the liquid reaction material is continuously fed into the heating section 10 from the lower part of the heating section 10, and the zinc powder and the liquid reaction material are in countercurrent contact in the heating section 10, so that the contact efficiency of the zinc powder and the liquid reaction material is improved, and the efficient operation of the continuous reaction is ensured. Since the reaction is continuous, the continuously fed zinc powder is continuously consumed as the continuous reaction proceeds, and the obtained product continuously flows out from the product overflow port, so that the zinc powder does not accumulate in the continuous reactor, thus avoiding the risk of spraying material and facilitating the application of the continuous preparation method in the large-scale production.

The heating temperature of the heating section 10 can be referred to the temperature required for the direct insertion of zinc atoms into the carbon-halogen bond reaction in the prior art. In order to effectively control the reaction rate and maximize the material conversion rate, the temperature of the heating section 10 is preferably controlled to be 60 ~ 80 °C, more preferably 65 ~ 75 °C.

In addition, in order to reduce the accumulation of zinc powder encountering the steam of the liquid reaction material on the inner walls of the reactor to enable the reaction to be carried out efficiently and continuously, the temperature of the cooling section 20 is preferably controlled to be 10 ~ 30 °C, preferably 15 ~ 25 °C to achieve rapid cooling of the obtained product system.

Since the zinc powder is fed from an over part of the heating section 10, the zinc powder is first located on the liquid surface of the heating section 10. In order to avoid the zinc powder from flowing out with the product system, resulting in a lower utilization rate of the zinc powder, preferably as shown in Fig.1, the product overflow port is provided with a drainage tube 21 connected to the outer wall of the cooling section 20, and the drainage tube 21 extends obliquely upward in a direction away from the outer wall, and the drainage tube 21 is used to play a role in sedimentation of the solid zinc powder. In order to improve the settling effect of the zinc powder and to obtain a more stable overflow rate, the angle α between the drainage tube 21 and the outer wall is preferably 10° ~ 40°, and preferably 20° ~ 30°. In addition, in order to separate the obtained product system as quickly as possible, the product overflow port is preferably arranged at one end of the cooling section 20 near the heating section 10.

The continuous reactor capable of realizing the above functions can be considered to be applied to the invention in the prior art, and preferably, the continuous reactor is a column continuous reactor or a stirred continuous reactor. The column continuous reactor is most preferred because of more reliable temperature control due to smaller cross section compared to the stirred continuous reactor.

In order to further optimize the mixing effect of the liquid reaction material and zinc powder, the heating section 10 of the column continuous reactor is provided with a stirring paddle 11 preferably as shown in Fig.1.

In one embodiment of the present application, the preparation method comprises: respectively continuously feeding the liquid reaction material at a first flow rate and the zinc powder at a second flow rate into the heating section 10, subjecting the liquid reaction material and the zinc powder to a direct insert zinc powder into carbon-halogen bond reaction in the heating section 10 to obtain a product system, allowing the product system to discharge from the continuous reactor via the product overflow port, and feeding the zinc powder at a third flow rate into the heating section10 after the overflow rate is stable, wherein the second flow rate and the first flow rate are controlled so that the molar equivalent of the fed zinc powder relative to the fed halide is 1 to 3, and preferably 1.5 to 2.0, and the third flow rate and the first flow rate are controlled so that the molar equivalent of the fed zinc powder to the fed halide is 1 to 1.1. Controlling of the molar equivalent of zinc powder to halide according to the variation of the overflow rate effectively avoids the accumulation of zinc powder in the long-term continuous reaction and prolongs the efficient implementation time of the preparation method of the application.

In order to increase the conversion rate of the reaction material, the retention time of the zinc powder in the heating section 10 is preferably 2 ~ 4 h, more preferably 2.5 ~ 3.5 h, and further preferably 160 ~ 180min. The retention time can be controlled by the supply rate of the zinc powder and the supply rate of the liquid reaction material, and the control method can be obtained by those skilled in the art through conventional tests and will not be repeated herein.

The liquid reaction materials of the application can be materials other than zinc powder in the prior art to achieve direct insertion of zinc atoms into the carbon-halogen bond reaction, and in order to accelerate the reaction rate, the liquid reaction materials further comprise a polar solvent, an initiator and a zinc powder activator. The initiator initiates the above reaction and the catalyst accelerates the reaction rate. The polar solvent, initiator and catalyst for the application can be selected from the corresponding substances used in the prior art for the direct insertion of zinc atoms into the carbon-halogen bond reaction. In order to reduce the cost, the polar solvent is preferably tetrahydrofuran, the initiator is preferably any one or more selected from 1,2-dichloroethane and 1,2-ethylene dibromide, and the zinc powder activator is preferably any one or more selected from trimethyl chlorosilane and trimethyl bromosilane.

In addition, in order to increase the utilization rate of each material, the weight ratio of the solvent to the halide is preferably 7 - 13: 1, and preferably 8 ~ 10:1, the molar equivalent of the initiator relative to the halide is preferably 0.03 ~ 0.08, and preferably 0.04 ~ 0.05, and the molar equivalent of the zinc powder activator relative to the halide is preferably 0.03 ~ 0.08, and preferably 0.04 ~ 0.05.

The beneficial effects of the application will be further explained in combination with embodiments and comparative embodiments.

### Embodiment 1

Under the protection of nitrogen, 4.45 Kg of tetrahydrofuran, 500 g of a main raw material 4-fluorobenzyl chloride, 18.8g of trimethylchlorosilane and 32.5 g of 1,2-dibromoethane are added to a 10 L of four-necked flask and stirred for 10 ~ 20 min to form a liquid reaction material.

The column reactor shown in Fig.1 is used for continuous reaction, wherein the temperature control range of the heating section 10 of the column reactor is set to be 65 ~ 75 °C and the temperature control range of the cooling section 20 is set to be 15 - 25 °C. The product overflow port is arranged at one end of the cooling section 20 near the heating section 10, and the angle α between the drainage tube 21 and the outer wall is 25°, and the stirring speed is adjusted between 100 ~ 200 r/min. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3 h of material ramming, the flow rate of the product overflow port is stable and the retention time of zinc powder in the column reactor is 170 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 0.4 % of raw material by GC, and the reaction yield is determined to be 95 % by titration.

### Embodiment 2

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~ 20 min to form the liquid reaction material.

The column reactor shown in Fig.1 is used for continuous reaction, wherein the temperature control range of the heating section 10 of the column reactor is set to be 65 ~ 75 °C and the temperature control range of the cooling section 20 is set to be 15 - 25 °C. The product overflow port is arranged at the end of the cooling section 20 near the heating section 10, and the angle α between the drainage tube 21 and the outer wall is 40°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3h of material ramming, the flow rate of the product overflow port is stable and the retention time of zinc powder in the column reactor is 174 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 3.3 % of raw material by GC, and the reaction yield is determined to be 90.8 % by titration.

### Embodiment 3

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~ 20 min to form the liquid reaction material.

The column reactor shown in Fig.1 is used for continuous reaction, wherein the temperature control range of the heating section 10 of the column reactor is set to be 65 ~ 75 °C and the temperature control range of the cooling section 20 is set to be 15 - 25 °C. The product overflow port is arranged at the end of the cooling section 20 near the heating section 10, and the angle α between the drainage tube 21 and the outer wall is 10°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3 h of material ramming, the flow rate of the product overflow is stable and the retention time of zinc powder in the column reactor is 166 min, and the zinc powder charging rate is adjusted to 0.6 g/ min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 3.2 % of raw material by GC, and the reaction yield is determined to be 92.4 % by titration.

### Embodiment 4

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~20min to form the liquid reaction material.

The column reactor shown in Fig.1 is used for continuous reaction, wherein the temperature control range of the heating section 10 of the column reactor is set to be 65 ~ 75 °C and the temperature control range of the cooling section 20 is set to be 15 - 25 °C. The product overflow port is arranged at the end of the cooling section 20 near the heating section 10, and the angle α between the drainage tube 21 and the outer wall is 20°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3 h of material ramming, the flow rate of the product overflow port is stable and the retention time of zinc powder in the column reactor is 168 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 0.5 % of raw material by GC, and the reaction yield is determined to be 95.2 % by titration.

### Embodiment 5

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~ 20 min to form the liquid reaction material.

The column reactor shown in Fig.1 is used for continuous reaction, wherein the temperature control range of the heating section 10 of the column reactor is set to be 65 ~ 75°C and the temperature control range of the cooling section 20 is set to be 15 - 25 °C. The product overflow port is arranged at the end of the cooling section 20 near the heating section 10, and the angle α between the drainage tube 21 and the outer wall is 30°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3h of material ramming, the flow rate of the product overflow port is stable and the retention time of zinc powder in the column reactor is 172 min, and the zinc powder feeding rate is adjusted to 0.6 g/min. The product system obtained by taking part of the overflow is rammed into 10wt% of aqueous ammonium chloride solution (the aqueous ammonium chloride solution is used as quenching solution and is de-oxygenated in advance), and an organic phase is taken to detect the remaining 0.2 % of raw material by GC, and the reaction yield is determined to be 95.5 % by titration.

### Embodiment 6

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10~20min to form the liquid reaction material.

The column reactor shown in Fig.1 is used for continuous reaction, wherein the temperature control range of the heating section 10 of the column reactor is set to be 65 ~ 75 °C and the temperature control range of the cooling section 20 is set to be 15 - 25 °C. The product overflow port is arranged at the end of the cooling section 20 near the heating section 10, and the angle α between the drainage tube 21 and the outer wall is 5°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3 h of material ramming, the flow rate of the product overflow port is stable and the retention time of zinc powder in the column reactor is 162 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 7.2 % of raw material by GC, and the reaction yield is determined to be 88 % by titration.

### Embodiment 7

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~ 20 min to form a liquid reaction material.

The column reactor shown in Fig.1 is used for continuous reaction, wherein the temperature control range of the heating section 10 of the column reactor is set to be 65 ~ 75 °C and the temperature control range of the cooling section 20 is set to be 15 - 25 °C. The product overflow port is arranged at the end of the cooling section 20 near the heating section 10, and the angle α between the drainage tube 21 and the outer wall is 45°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.0 8g/min. After 3 h of material ramming, the flow rate of the product overflow port is stable and the retention time of zinc powder in the column reactor is 177 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 6.2 % of raw material by GC, and the reaction yield is determined to be 89.7 % by titration. This may be because the angle between the drainage tube and the outer wall is too large, the zinc powder is likely to stick to the vessel wall and the diffusion of zinc powder is affected, resulting in a poor reaction efficiency.

### Embodiment 8

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~ 20 min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3 h of material ramming, the flow rate of the product overflow port is stable and the retention time of zinc powder in the column reactor is 170 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 1.8 % of raw material by GC, and the reaction yield is determined to be 94.2 % by titration.

### Embodiment 9

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~ 20 min to form the liquid reaction material.

The column reactor shown in Fig.1 is used for continuous reaction, wherein the temperature control range of the heating section 10 of the column reactor is set to be 70 ~ 80 °C and the temperature control range of the cooling section 20 is set to be 20 ~ 30 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3 h of material ramming, the flow rate of the product overflow port is stable and the retention time of zinc powder in the column reactor is 170 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 0.4 % of raw material by GC, and the reaction yield is determined to be 94.8 % by titration.

### Embodiment 10

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10~20min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 15 g/min and the zinc powder feeding rate is controlled to be 1.35 g/min. After 3h of material ramming, the flow rate of the product overflow port is stable and the retention time of zinc powder in the column reactor is 135min, and the zinc powder feeding rate is adjusted to 0.67 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 10.6 % of raw material by GC, and the reaction yield is determined to be 84.3 % by titration.

### Embodiment 11

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10 ~ 20 min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 15 g/min and the zinc powder feeding rate is controlled to be 1.08 g/min. After 3h of material ramming, the flow rate of the product overflow port is stable and the retention time of zinc powder in the column reactor is 135 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 32.5 % of raw material by GC, and the reaction yield is determined to be 61.8 % by titration.

### Embodiment 12

Under the protection of nitrogen, 4.45 Kg of tetrahydrofuran, 500 g of a main raw material 4-fluorobenzyl chloride, 18.8 g of trimethylchlorosilane and 32.5 g of 1,2-dibromoethane are added to a 10 L of four-necked flask and stirred for 10-20 min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 9 g/min and the zinc powder feeding rate is controlled to be 1.08 g/min. After 4h of material ramming, the flow rate of the product overflow port is stable and the retention time of zinc powder in the column reactor is 230 min, and the zinc powder feeding rate is adjusted to 0.6 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 0.2 % of raw material by GC, and the reaction yield is determined to be 94.2 % by titration.

### Embodiment 13

Under the protection of nitrogen, 4.45 Kg of tetrahydrofuran, 500 g of a main raw material 4-fluorobenzyl chloride, 6.2 g of trimethylchlorosilane and 32.5 g of 1,2-dibromoethane are added to a 10L of four-necked flask and stirred for 10 ~ 20 min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.08 g/min. After 3 h of material ramming, the flow rate of the product overflow port is stable and the retention time of zinc powder in the column reactor is 170 min, and the zinc powder feeding rate is adjusted to 0.6 g/min. The product system obtained by taking part of the overflow is rammed into 10wt% of aqueous ammonium chloride solution (the aqueous ammonium chloride solution is used as quenching solution and is de-oxygenated in advance), and an organic phase is taken to detect the remaining 23.6 % of raw material by GC, and the reaction yield is determined to be 73.5 % by titration.

### Embodiment 14

Under the protection of nitrogen, 4.45 Kg of tetrahydrofuran, 500 g of a main raw material 4-cyanobenzyl chloride, 17.9 g of trimethylchlorosilane and 31 g of 1,2-dibromoethane are added to a 10 L of four-necked flask and stirred for 10 ~ 20 min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.03 g/min. After 3h of material ramming, the flow rate of the product overflow port is stable and the retention time of zinc powder in the column reactor is 170 min, and the zinc powder feeding rate is adjusted to 0.57 g/min. The product system obtained by taking part of the overflow is rammed into 10wt% of aqueous ammonium chloride solution (the aqueous ammonium chloride solution is used as quenching solution and is de-oxygenated in advance), and an organic phase is taken to detect the remaining 0.8 % of raw material by GC, and the reaction yield is determined to be 94.2 % by titration.

### Embodiment 15

Under the protection of nitrogen, 4.45 Kg of tetrahydrofuran, 500 g of 4-nitrobenzyl chloride, 15.8 g of trimethylchlorosilane and 27.4 g of 1,2-dibromoethane were added to a 10 L four-necked flask, and the liquid reaction material was formed by stirring for 10 ~ 20 min.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 0.91 g/min. After 3 h of material ramming, the flow rate of the product overflow port is stable and the retention time of zinc powder in the column reactor is 170 min, and the zinc powder feeding rate is adjusted to 0.5 g/min. The product system obtained by taking part of the overflow is rammed into 10wt% of aqueous ammonium chloride solution (the aqueous ammonium chloride solution is used as quenching solution and is de-oxygenated in advance), and an organic phase is taken to detect the remaining 1.2 % of raw material by GC, and the reaction yield is determined to be 94.7 % by titration.

### Embodiment 16

Under the protection of nitrogen, 4.45 Kg of tetrahydrofuran, 500 g of 4-ethylbenzyl chloride, 17.6 g of trimethylchlorosilane and 30.4 g of 1,2-dibromoethane were added to a 10L four-necked flask, and the liquid reaction material was formed by stirring for 10 ~ 20 min.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1.01 g/min. After 3 h of material ramming, the flow rate of the product overflow port is stable and the retention time of zinc powder in the column reactor is 170min, and the zinc powder feeding rate is adjusted to 0.56 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 0.9 % of raw material by GC, and the reaction yield is determined to be 95.0 % by titration.

### Embodiment 17

Under the protection of nitrogen, 4.45 Kg of tetrahydrofuran, 500 g of a main raw material 4-methoxybenzyl chloride, 17.4 g of trimethylchlorosilane and 30g of 1,2-dibromoethane are added to a 10 L of four-necked flask and are stirred for 10 ~ 20 min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 1 g/min. After 3 h of material ramming, the flow rate of the product overflow port is stable and the retention time of zinc powder in the column reactor is 170min, and the zinc powder feeding rate is adjusted to 0.55 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 1.6 % of raw material by GC, and the reaction yield is determined to be 93.8 % by titration.

### Embodiment 18

Under the protection of nitrogen, 4.45 Kg of tetrahydrofuran, 500 g of a main raw material methyl 4-(chloromethyl)benzoate, 14.7 g of trimethylchlorosilane and 25.4 g of 1,2-dibromoethane are added to a 10 L of four-necked flask and are stirred for 10 ~ 20 min to form the liquid reaction material.

The column reactor shown in Fig.1 is used for continuous reaction, wherein the temperature control range of the heating section 10 of the column reactor is set to be 60 ~ 70 °C and the temperature control range of the cooling section 20 is set to be 10 - 20 °C. The product overflow port is arranged at the end of the cooling section 20 near the heating section 10, and the angle α between the drainage tube 21 and the outer wall is 25°. A feeding pump is started to provide liquid reaction material for the heating section 10, and a continuous solid feeder is started to provide zinc powder for the heating section 10, wherein the flow rate of the liquid reaction material is controlled to be 12 g/min and the zinc powder feeding rate is controlled to be 0.84 g/min. After 3 h of material ramming, the flow rate of the product overflow port is stable and the retention time of zinc powder in the column reactor is 170 min, and the zinc powder feeding rate is adjusted to 0.47 g/min. The product system obtained by taking part of the overflow is rammed into 10 wt% of aqueous ammonium chloride solution (the aqueous ammonium chloride solution is used as quenching solution and is de-oxygenated in advance), and an organic phase is taken to detect the remaining 0.6 % of raw material by GC, and the reaction yield is determined to be 94.2 % by titration.

From the above descriptions, it can be seen that the above embodiments of the invention achieve the following technical effects:
The continuous reactor is used as a reaction device for the direct insertion of zinc atoms into the carbon-halogen bond reaction, and the zinc powder is continuously fed into the heating section from an over part of the heating section and the liquid reaction material is continuously fed into the heating section from the lower part of the heating section, and the liquid reaction material and the zinc powder are in counter-current contact in the heating section, so that the contact efficiency of the liquid reaction material and the zinc powder is improved and the efficient operation of the continuous reaction is ensured. Since the reaction is continuous, the continuously fed zinc powder is continuously consumed as the continuous reaction proceeds, and the obtained product continuously flows out from the product overflow port, so that the zinc powder does not accumulate in the continuous reactor, thus avoiding the risk of spraying material and facilitating the application of the continuous preparation method in the large-scale production.

The above descriptions are only preferred embodiments of the invention, and are not intended to limit the invention, and the invention can have various alterations and variations for those skilled in the art. Any alteration, equivalent replacement, improvement and soon made within the spirit and principle of the invention shall be compassed by the protection scope of the invention.

## Claims

1. A continuous preparation method for a benzylzinc halide and a derivative thereof, wherein the continuous preparation method uses a continuous reactor for reaction of direct inserting a zinc atom into a carbon-halogen bond, wherein the continuous reactor comprises a heating section (10) and a cooling section (20) that are connected to each other, the cooling section (20) is located above the heating section (10), and the cooling section (20) has a product overflow port, the continuous preparation method comprising:
respectively continuously feeding a liquid reaction material and a zinc powder to the heating section (10), the zinc powder being continuously fed into the heating section (10) from an over part of the heating section (10), the liquid reaction material being fed into the heating section (10) from a lower part of the heating section (10), subjecting same to a direct the zinc atom insert into carbon-halogen bond reaction to obtain a product system, and allowing the product system to discharge from the continuous reactor via the product overflow port,
wherein the liquid reaction materials comprise a halide, and the halide has structural formula I: 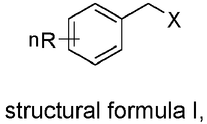
wherein n is any one integer of 0 to 5, X is -CI, -Br or -I, each R is independently selected from -F, -CI, -Br, nitro, cyano, C₁ to C₅ alkyl, C₁ to C₅ alkoxy and -COOR₁, and R₁ is C₁ to C₅ alkyl.

2. The continuous preparation method as claimed in claim 1, wherein the temperature of the heating section (10) is controlled at 60 ~ 80 °C, and preferably 65 ~ 75 °C.

3. The continuous preparation method as claimed in claim 1, wherein the temperature of the cooling section (20) is controlled at 10 ~ 30 °C, and preferably 15 ~ 25 °C.

4. The continuous preparation method as claimed in claim 1, wherein the product overflow port is provided with a drainage tube (21) connected to an outer wall of the cooling section (20), the drainage tube (21) extends obliquely upward in a direction away from the outer wall, the angle α between the drainage tube (21) and the outer wall is preferably 10° ~ 40°, and preferably 20° ~ 30°, and the product overflow port is preferably provided at one end of the cooling section (20) near the heating section (10).

5. The continuous preparation method as claimed in claim 1, wherein the continuous reactor is a column continuous reactor or a stirred continuous reactor.

6. The continuous preparation method as claimed in claim 5, wherein the heating section (10) of the column continuous reactor is provided with a stirring paddle (11).

7. The continuous preparation method as claimed in claim 1, wherein the preparation method comprises:
respectively continuously feeding the liquid reaction material at a first flow rate and the zinc powder at a second flow rate into the heating section (10), subjecting the liquid reaction material and the zinc powder to a direct insert zinc atom into carbon-halogen bond reaction in the heating section (10) to obtain a product system, allowing the product system to discharge from the continuous reactor via the product overflow port, and feeding the zinc powder at a third flow rate into the heating section (10) after the overflow rate is stable, wherein the second flow rate and the first flow rate are controlled so that the molar equivalent of the fed zinc powder relative to the fed halide is 1 to 3, and preferably 1.5 to 2.0, and the third flow rate and the first flow rate are controlled so that the molar equivalent of the fed zinc powder to the fed halide is 1 to 1.1.

8. The continuous preparation method as claimed in claim 1, wherein the retention time of the zinc powder in the heating section (10) is 2 ~ 4 h, and preferably 2.5 ~ 3.5 h.

9. The continuous preparation method as claimed in claim 1, wherein the liquid reaction materials further comprise a polar solvent, an initiator and a zinc powder activator, wherein the polar solvent is preferably tetrahydrofuran, the initiator is preferably any one or more selected from 1,2-dichloroethane and 1,2-ethylene dibromide, and the zinc powder activator is preferably any one or more selected from trimethyl chlorosilane and trimethyl bromosilane.

10. The continuous preparation method as claimed in claim 9, wherein the weight ratio of the solvent to the halide is 7 ~ 13: 1, and preferably 8 ~ 10:1, the molar equivalent of the initiator relative to the halide is preferably 0.03 ~ 0.08, and preferably 0.04 ~ 0.05, and the molar equivalent of the zinc powder activator relative to the halide is preferably 0.03 ~ 0.08, and preferably 0.04 ~ 0.05.
